# EUROPEAN PATENT APPLICATION

(11) **EP 1 972 409 A1**
(43) Date of publication of application: **24.09.2008**
(21) Application number: 08153058.6
(22) Date of filing: 20.03.2008
(51) Int. Cl.: B23P 15/00, G02C 5/22

(54) **Method for making a hinge for spectacles, and hinge thus made**

(30) Priority: 22.03.2007 IT UD20070060
(71) Applicant: Visottica Industrie S. P. A., 31058 Susegana TV (IT)
(72) Inventor: Montalban, Rinaldo, 30100, Venezia (IT)
(74) Representative: Petraz, Gilberto Luigi

(57) **Abstract**

Method for making a hinge (10) for spectacles comprising two articulation elements (13, 15), pivoted to each other and mounted respectively on a temple (11) and a lug (12) of a frame for the glasses. The method provides, for at least one of the articulation elements (13, 15) at least a first step of shaping/minting an element of crude material (20, 25), during which, by means of shaping/minting members (21, 26), the element of crude material (20, 25) is shapedhninted so as to achieve a semi-worked piece (22, 27) substantially having the final aesthetic form of the relative articulation element (13, 15); and a second finishing step, obtained by mechanical working, by means of removal of material, during which one or more workings of the semi-worked piece (22, 27) are made, in order to obtain the articulation element (13, 15).

## Description

### FIELD OF THE INVENTION

The present invention concerns a method for the production of a hinge for spectacles, particularly for an elastic hinge, able to connect a temple to a lug of a glasses frame.

### BACKGROUND OF THE INVENTION

Elastic hinges for spectacles are known, made of metal or plastic material, which articulate with respect to each other a temple and a lug of a frame, allowing to maintain an adequate pressure on the user's temples in order to improve wearability.

Traditional elastic hinges generally consist of two articulation elements pivoted to each other and mounted, respectively, a first one on the temple and a second on the lug, known more simply as front.

In particular, the first articulation element substantially comprises a box-like body provided with an internal housing, in which an elastication slider, called "flex", is slidingly housed, generally with a helical spring, which allows the extra travel on opening and the elastication of the hinge.

In the field of production of spectacles and their components, there is an ever-growing need to confer on the various elements, such as hinges, temples, lugs and other parts of the frame, particular aesthetic forms, and to affix upon them trademarks or logos identifying the producer or the product.

For this reason, both the box-like body and the fronts that make up the hinges for spectacles are made individually by means of known methods which provide specific mechanical workings with removal of material, such as for example milling, holing, boring and others.

These known methods with removal of material not only have a limited number of applications but also need a high number of operations, which become very complex as the complexity of the component increases, also due to the limited sizes of the components themselves, with a consequent increase in the costs of production, and in any case entailing a waste of material.

Simple and economical methods are also known which, starting from a metal strip, provide to make box-like bodies and fronts of the hinges for spectacles through operations of shearing, drawing and bending the strip.

This type of known method, however, does not allow good flexibility of aesthetic conformation of the box-like body and front.

It is also known in the art to produce box-like bodies and fronts for elastic hinges by means of molding processes with injection of metal powders, that is, the so-called methods of PIM (Powder Injection Molding) or MIM (Metallic Powder Injection Molding).

However, although they allow good flexibility and precise aesthetic conformation of the box-like bodies and fronts obtained, such methods have very high costs.

Methods are also known in which the housing in the box-like body for the elastication slider and the front of the hinge are integrated with the relative temple and lug.

In these methods, in order to make the temple or lug with the housing of the box-like body or front integrated, at least the following steps are needed:
- a first hammering step in which a metal round piece is plastically deformed cold, to be pre-shaped according to the final aesthetic form;
- a second shaping/minting step in which the pre-shaped round piece is plastically deformed cold to make the final aesthetic form; and
- a third step of mechanical working in which the housing for the elastication slider is made by means of machine tools.

However, since they have to provide the simultaneous manufacture of the temple or lug with the relative housing or front, these methods need said first hammering step, in which the original metal round piece is substantially pre-shaped, so as to obtain the round piece with different variations in diameter and thus facilitate the operations of shaping/minting in the second step.

This necessary pre-shaping, however, entails an increase in both the times and costs of production.

Methods are also known for making hinges and fronts by means of micro-fusion and finishing on machine tools.

A method is known, from the US patent US-A-1708202, for producing non-elastic hinges for spectacles, with male and female articulation parts, in which the female part is made starting from a metal strip, while the male part is made starting from a bar profile, cut to size.

The female part is then defined and formed by bending its edges, so as to form fins, eyelets and other details.

A method is also known, from the Japanese patent application JP-A-63063019, for producing non-elastic hinges with improved mechanical characteristics, hardness and resistance to wear, exploiting the fact that some types of metals, for example Cu-Be alloys, lend themselves to heat treatments of hardening and ageing.

In this known solution, the components of the hinge are made by drawing a metal wire made with the treated alloy, and subsequent workings by removal of material, such as milling, holing or other, in order to complete the hinge. To conclude, an ageing treatment is performed on the hinge, thus improving the mechanical characteristics of the piece.

One purpose of the present invention is to perfect a method for making a hinge for spectacles which allows to conform said hinge substantially with any aesthetic form whatsoever, in a simple, efficient and economical manner.

Another purpose of the present invention is to make a hinge for spectacles in a simple and economical manner having substantially any aesthetic form whatsoever.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

A method according to the present invention is able to make a hinge for spectacles substantially consisting of two articulation elements pivoted to each other and mounted respectively on a temple and a lug of a frame of said spectacles.

In accordance with the above purpose, the method according to the present invention provides, for at least one of the articulation elements, at least the following steps:
- a first step of shaping/minting of an element of crude material, for example a metal block, during which, by means of shaping/minting means, the element of crude material is shaped/minted in order to make a semi-worked piece substantially having the final aesthetic form of the relative articulation element; and
- a second finishing step obtained by mechanical working with removal of material, during which the workings to finish the semi-worked piece are effected, for example the internal housing seatings for a possible elastication slider of the temple, until the desired articulation element is obtained.

A further step of shearing may possibly be carried out, in order to eliminate possible excess burrs formed during the previous first step of plastic deformation. For example, this step could become necessary if the starting material is in excess of what is needed.

In this case, starting from a shaping/minting step and with only two working passes, the articulation element is completely made, substantially whatever its final aesthetic form may be, and its possible seatings or necessary workings.

In fact, by making the articulation elements of the hinge individually, that is, by separating them from simultaneous production with the temple or lug, it is possible to start from an element of crude material having a considerably reduced volume and extension, and hence perfectly shapable directly by means of shaping/minting, without needing to make a pre-shaping through hammering, drawing steps or bending.

Moreover, compared with other known methods for making box-like bodies and fronts of elastic hinges, two steps are combined, a first step of shaping/minting which guarantees full freedom of design and an improvement of the mechanical characteristics, and a second finishing step on machine tools which, instead, guarantees maximum respect of the sizes of the piece.

The solution according to the present invention thus allows to make the hinge for spectacles in a quicker, simpler and cheaper way compared with the state of the art, while guaranteeing an optimum and great flexibility in shaping the articulation elements.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a partly sectioned lateral view of a hinge made with the method according to the present invention welded on a frame made of metal material;
- figs. 2a and 2b show schematically an operating sequence of a first step of the method according to the present invention, applied to a first of the two articulation elements;
- fig. 3 is a schematic view of a second step of the method according to the present invention, applied to the same articulation element as in figs. 2a and 2b;
- figs. 4a and 4b show schematically an operating sequence of a first step of the method according to the present invention, applied to a second of the two articulation elements;
- fig. 5 is a schematic view of a second step of the method according to the present invention, applied to the same articulation element as in figs. 4a and 4b;
- fig. 6 is a perspective view of the two elements of the elastic hinge made with the method according to the present invention;
- fig. 7 is a partly sectioned lateral view of a variant of an elastic hinge made with the method according to the present invention;
- figs. 8a and 8b show schematically an operating sequence of an auxiliary step of the method according to the present invention, applied to a first of the two articulation elements;
- figs. 9a and 9b show schematically an operating sequence of an auxiliary step of the method according to the present invention, applied to a second of the two articulation elements.

### DETAILED DESCRIPTION OF A PREFERENTIAL FORM OF EMBODIMENT

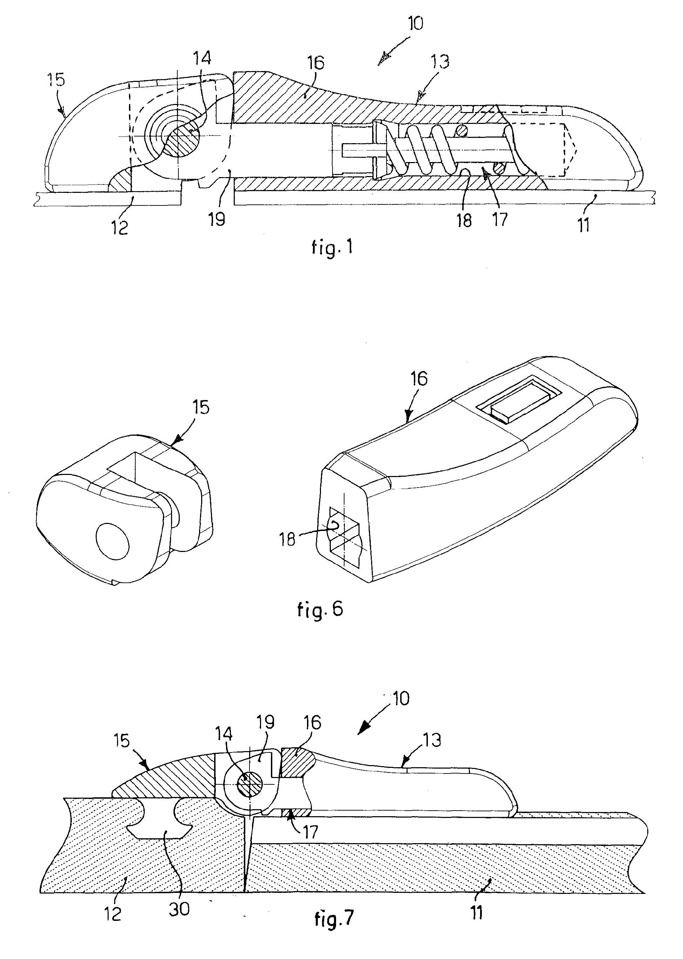

With reference to fig. 1, a hinge for spectacles 10 according to the present invention is applied to reciprocally articulate a temple 11 to a lug 12 of a frame for spectacles.

In particular, the hinge 10 according to the present invention is of the elasticized type, that is, able to allow an extra travel upon opening of the temples 11 with a desired elastic return in order to facilitate operations for putting on the spectacles and their conditions of wearability.

The hinge 10 comprises, in traditional manner, two articulation elements, respectively a first 13, associated with the temple 11, and a second, or front 15, associated with the lug 12, both made of metal and reciprocally pivoted with respect to each other by means of a pin 14, for example a screw.

In the embodiment shown in figs. 1 to 6, the first articulation element 13 comprises a box-like body 16 joined, for example by welding, to the temple 11, and an elastic slider 17 at least partly housed in a relative seating 18 made in the box-like body 16, and provided with a pivoting eyelet 19, external, with which it determines the pivoting of the first articulation element 13 with the front 15.

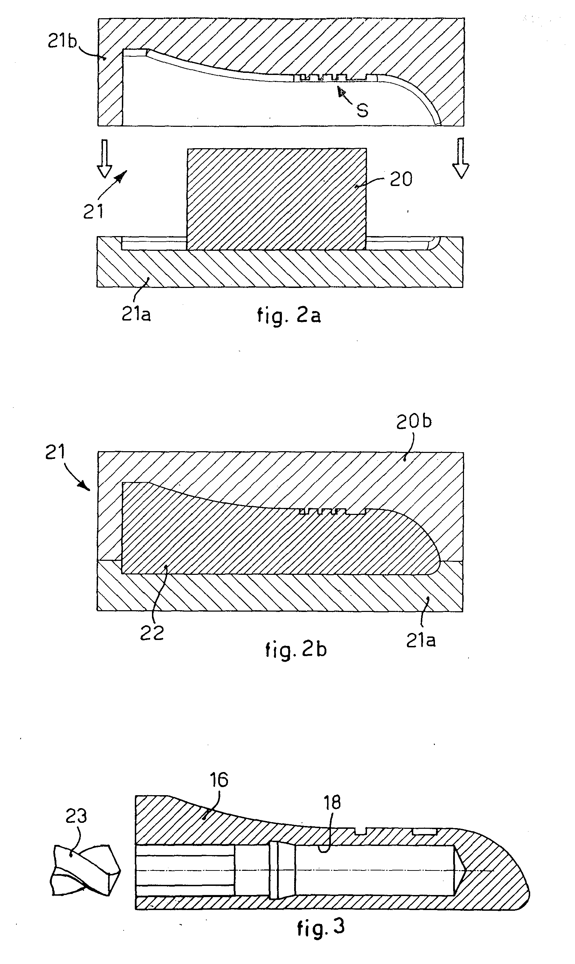

With reference to figs. 2a, 2b and 3, the steps of the method according to the invention are shown in sequence, in order to make the box-like body 16 of the first articulation element 13.

In particular, figs. 2a and 2b show an operating sequence of a first step of the method, in which a metal element 20, substantially crude, is suitably positioned between a matrix 21a and a punch 21b of a shaping/minting dye 21, so as to shape/mint the metal element 20, in order to obtain a semi-worked piece 22 having the definitive aesthetic conformation of the box-like body 16 to be made. This shaping/minting is effected over the whole mass.

Advantageously, the metal element 20 is made of a metal alloy with high ductility characteristics, such as for example alloys with a base of copper, such as nickel silver, steels, preferably stainless steels, or titanium and its alloys.

In this case, on the internal profile of the punch 21b the shaping of a specific logo or trademark to identify the product or producer is made in negative; when the first step is finished, this will be impressed on the external surface of the box-like element 16.

Fig. 3 shows schematically a second step in the method according to the invention, in which, by means of a tool for removing material, for example a drill bit 23, a milling cutter or other, the seating 18 for housing the elastic slider 17 is made.

At the end of the second step the box-like body 16 is substantially finished and does not need any other working.

At the end of this step, however, according to a variant, a further step may be provided, of shearing in order to eliminate any possible excess burrs formed during the previous step of shaping/minting. This step is applied particularly if the metal element 20 has a mass exceeding that necessary to make the box-like element 16.

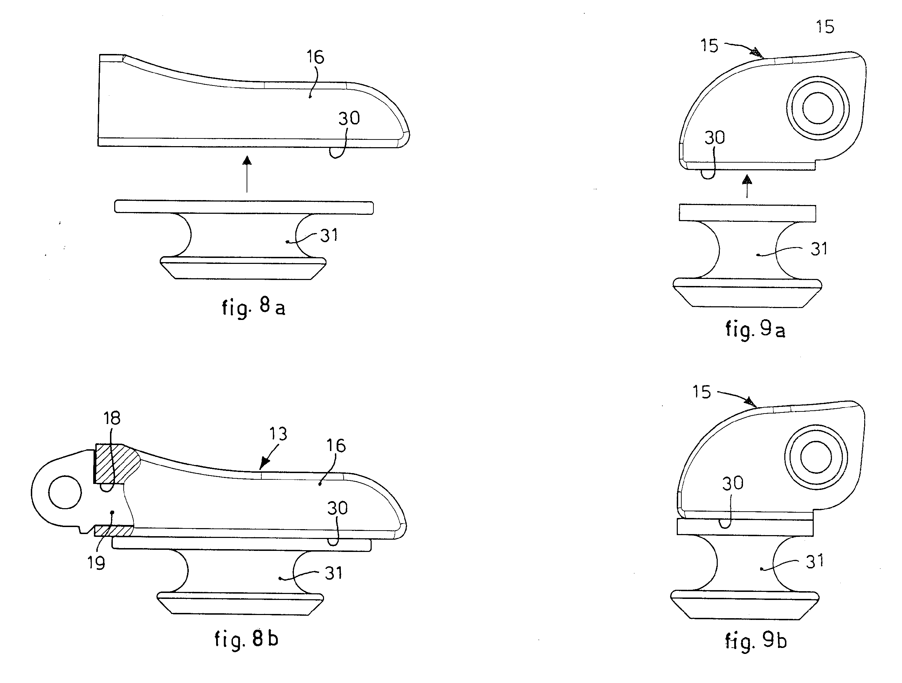

As shown in sequence in figs. 8a and 8b, on a base surface 30 of the box-like body 16, in an auxiliary step, an attachment anchor 31 is joined, for example by welding, spot-welding, mechanical fastening, gluing or the like, able to be drowned, during its assembly onto the relative temple 11, in the thickness of the temple 11 itself.

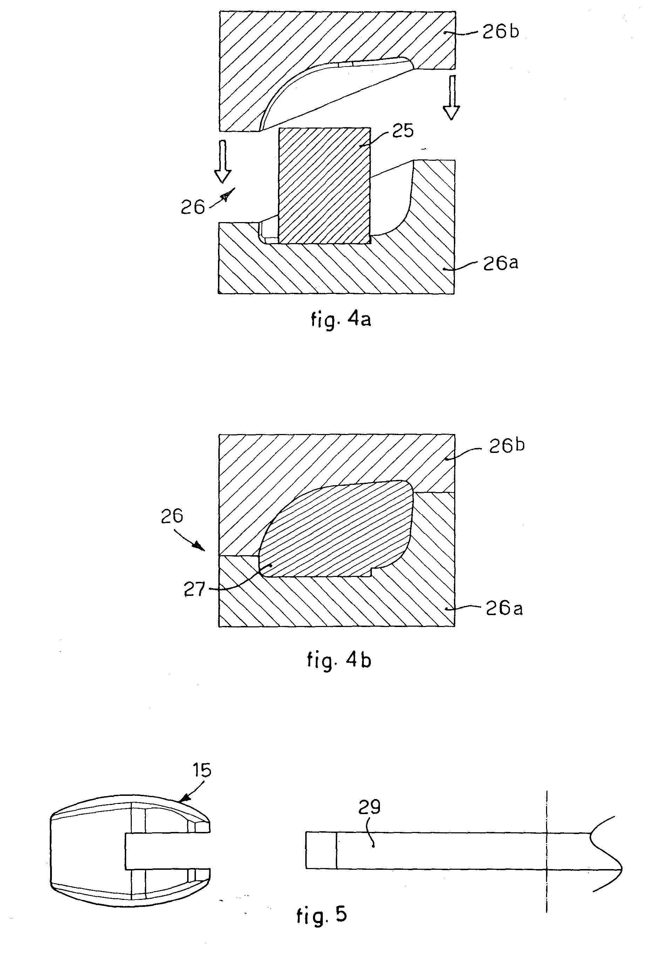

As shown in figs. 4a, 4b and 5, the steps of the method according to the invention are shown in sequence, applied to make the front 15 of the hinge 10.

In particular, figs. 4a and 4b show the operating sequence of the first step of the method, in which a metal element 25, substantially crude, is suitably positioned between the matrix 26a and the punch 26b of a shaping/minting dye 26, so as to shape/mint the metal element 25 in order to obtain a semi-worked piece 27 having the definitive aesthetic conformation of the front 15 to be made.

In this case too, the metal element 25 advantageously consists of a metal alloy with high ductility characteristics, for example among those given as examples for the metal element 20.

Fig. 5 shows the second step of the method according to the invention, in which, by means of one or more tools for removing material, for example a milling cutter 29, a drill bit or other, the through hole is made in which the pin 14 is housed and also the seating which houses the pivoting eyelet 19.

At the end of the second step, as for the box-like body 16, the front 15 is substantially finished and does not require any further working, except, possibly, the shearing of the burrs due to an excess of metal element 25.

As shown in sequence in figs. 9a and 9b, on a base surface 30 of the front 15, in an auxiliary step, an attachment anchor 31 is joined, for example by welding, spot-welding, mechanical fastening, gluing or the like, able to be drowned, during its assembly onto the relative lug 12, in the thickness of the lug 12 itself.

It is clear, however, that modifications and/or additions of steps or parts may be made to the method and the hinge 10 as described heretofore, without departing from the field and scope of the present invention.

For example, according to the form of embodiment shown in fig. 7, the elastic hinge 10 according to the present invention is mounted on a plastic frame. In this case, the front 15 is provided with an anchor 31, also made by shaping/minting according to the present invention, and drowned in the plastic material of the lug 12.

According to a variant the box-like body 16 is provided with two or more seatings in which the same number of relative elastic sliders 17 are housed.

According to another variant, not shown, the box-like body 16 can also be provided with anchors, in this case too made by shaping/minting according to the present invention, and able to be drowned in the relative plastic temple 11.

It is also clear that, although the present invention has been described with reference to specific examples, a person of skill in the art shall certainly be able to achieve many other equivalent forms of method for making a hinge for spectacles, and hinge thus made, having the characteristics as set forth in the claims and hence all coming within the field of protection defined thereby.

## Claims

1. Method for making a hinge for spectacles comprising two articulation elements (13, 15), pivoted to each other and mounted respectively on a temple (11) and a lug (12) of a frame for said glasses, **characterized in that** it provides, for at least one of said articulation elements (13, 15) at least the following steps:
- a first step of shaping/minting an element of crude material (20, 25), during which, by means of shaping/minting means (21, 26), said element of crude material (20, 25) is shaped/minted so as to achieve a semi-worked piece (22, 27) substantially having the final aesthetic form of the relative articulation element (13, 15); and
- a second finishing step, obtained by mechanical working, by means of removal of material, during which one or more workings of said semi-worked piece (22, 27) are made, in order to obtain said articulation element (13, 15).

2. Method as in claim 1, **characterized in that** at the end of said first step or of said second step, it comprises a third shearing step in which possible burrs are removed in excess at the end of said first step.

3. Method as in claim 1 or 2, **characterized in that** said crude material (20, 25) is metal.

4. Method as in claim 3, **characterized in that** said crude material (20, 25) is chosen from an alloy based on copper, steel, titanium or other metal alloy with high ductility characteristics.

5. Method as in claim 1, 2, 3 or 4, **characterized in that** in said first step, on the external surface of said articulation element (13, 15), one or more identifying logos or trademarks are also made by shaping/minting.

6. Method as in any claim hereinbefore, **characterized in that** in said second step, on at least a first articulation element (13), at least a housing seating (18) is made for at least an elastic slider (17) for elasticizing said hinge (10).

7. Method as in any claim hereinbefore, **characterized in that** in said second step, on at least a second articulation element (15) at least a seating of articulated coupling with said first articulation element (13), and a hole for positioning a pivoting pin (14) of said hinge (10) are made.

8. Method as in any claim hereinbefore, **characterized in that** it comprises at least an auxiliary step in which, on a base surface (30) of at least one of said articulation elements (13, 15), at least an attachment anchor (31) is joined.

9. Method as in any claim hereinbefore from 1 to 7, **characterized in that** in said first step, on a base surface (30) of at least one of said articulation elements (13, 15), at least an attachment anchor (31) is made by shaping/minting.

10. Hinge for spectacles comprising two articulation elements (13, 15), pivoted to each other and mounted respectively on a temple (11) and a lug (12) of a frame for said glasses, **characterized in that** at least one of said articulation elements (13, 15) is made by shaping/minting starting from an element of crude material (20, 25) from which a semi-worked piece (22, 27) is made and a mechanical finishing working obtained by removing material from said semi-worked piece (22, 27).

11. Hinge as in claim 10, **characterized in that** said crude material (20, 25) is metal.

12. Hinge as in claim 11, **characterized in that** said crude material (20, 25) is chosen from an alloy based on copper, steel, titanium or other metal alloy with high ductility characteristics.

13. Hinge as in any claim from 10 to 12, **characterized in that** at least a first articulation element (13) comprises at least a housing seating (18) in which at least an elastic slider (17) for elasticizing said hinge (10) is able to be housed slidingly.

14. Hinge as in any claim from 10 to 13, **characterized in that** at least one of said articulation elements (13, 15) comprises at least a base surface (30) on which at least an attachment anchor (31) is able to be joined.

15. Hinge as in any claim hereinbefore from 10 to 13, **characterized in that** at least one of said articulation elements (13, 15) comprises at least a base surface (30) on which at least an attachment anchor (31) is made by shaping/minting.
